# EUROPEAN PATENT APPLICATION

(11) **EP 2 905 604 A1**
(43) Date of publication of application: **12.08.2015**
(21) Application number: 14154225.8
(22) Date of filing: 07.02.2014
(51) Int. Cl.: G01N 21/45, G01N 21/77

(54) **Device for detection of a light modifying target substance, method for detection of a target substance, and use of an optical fiber for detection of a target substance**

(71) Applicant: QIAGEN Lake Constance GmbH, 78333 Stockach (DE)
(72) Inventor: Elmar Christian Feuerbacher, 78462 Konstanz (DE)
(74) Representative: König, Gregor Sebastian

(57) **Abstract**

Device for detection of a light modifying target substance, the device comprising at least one optical fiber (1) with a front surface (4), the front surface (4) comprising a biosensor that is adapted to contact the target substance, and a device for measuring interference signals (6), the device being positioned in the beam reflected by the front surface (4) in order to detect an interference signal modified by the target substance in contact with the biosensor.

## Description

The invention pertains to the field of detection of a light modifying target substance, especially to the detection of the amount of the target substance in a fluid (concentration), preferably a liquid.

US 2012/0058569 A1 discloses a method and device for determining optical properties by measuring intensities on a thin layer. As incident light, either a single wavelength is, or several spectrally spaced apart and thus individual different wavelengths are, incident simultaneously or sequentially, incident on the thin layers to be tested and measured. Changes in the optical thickness are computed from the spectral position of the interference extremes and their mutual spacing. A shift in the interference pattern can be observed. The optical layer thickness can also be determined from the change in the intensity at one or several wavelengths. US 2012/0058569 A1 discloses to measure intensities on a thin layer, wherein light is incident on at least one partially transparent carrier comprising the thin layer. At least one region on its surface of the thin layer comprises receptor molecules with specific and/or non-specific binding effects. The thin layer is affected by the sample to be tested because the interaction of the receptor molecules on the thin layer with the corresponding species in the sample causes a change in the layer thickness in the region of the interaction. The change in layer thickness in turn affects the light that is incident on the carrier and reflected at the surface of the thin layer. The intensity of light reflected at the surface of the thin layer is subsequently detected by the detector arrangement.

Although the device and method disclosed in US 2012/0058569 A1 obtains good results, the configuration is complex.

The object of the present invention is to provide a suitable device and method for detection of a target substance which is simpler.

This object is solved by the subject-matter of the independent claims.

The present invention is based on the finding that an optical fiber comprising a biosensor on its surface (exposed to a fluid of interest), the biosensor selected in accordance with a target substance to be detected, can be used and that interference signals of the light coupled into the optical fiber and reflected or transmitted can be determined as a measure for the presence of target substance, especially the amount of the target substance (corresponding to the thickness of the layer of the target substance), which is in contact with the biosensor. No fluorophores or other luminescent substances are necessary, however, the use of fluorophores or other luminescent substances is not prohibited.

The present invention provides a device for detection of a light modifying target substance. The device comprises at least one optical fiber with a front surface. The front surface comprises a biosensor that is adapted to contact the target substance. Further, the device comprises a device for measuring interference signals. The device for measuring interference signals is positioned in the beam reflected or transmitted by the front surface together with the biosensor in order to detect an interference signal modified by the target substance in contact with the biosensor.

The term "measuring interference signal" according to the invention encompasses to measure a signal which is based on an interference of light at a boundary and/or surface, which can be at the front surface of the optical fiber. In this regard, interference describes that light from a source is divided into two waves which have then to be re-combined. The two waves originate or arise from light reflecting off the front and back surface of a thin film or layer (which is according to the invention the biosensor together with the target substance). According to the invention, the interference signal is measured. It is possible to measure the interference signal as the light intensity, especially as a function of wavelength or at a specific wavelength. Thus, the term "measuring interference signal" encompasses "measuring light intensity".

It is also possible to measure transmission, transflection, reflection, polarisation, fluorescence, phosphorescence or a combination thereof as a function of the attachment of the target substance in contact with the biosensor. Transmission, transflection, reflection, polarisation, fluorescence and phosphorescence of the light emitted by a light source are understood as "optical characteristic" of the light modified by the layer of target substance in contact with the target substance. The target substance, the biosensor and/or the biosensor in contact with the target substance can have a property which modifies transmission, transflection, reflection, polarisation, fluorescence and/or phosphorescence of the light.

It is possible that alternatively or as an additional possibility the biosensor on the surface of the optical fiber can be exposed to light originating from a light source and the interference signals of the transmitted light can be measured. The light illuminating the biosensor can be coupled into the optical fiber or can originate from the outside of the optical fiber. In the first case the interference signal of light originating from the biosensor surface out of the optical fiber is measured. In the second case the interference signal of the light transmitted into the biosensor surface and propagating the optical fiber is measured. The interference signal of the light transmitted by the biosensor surface can be determined as a measure for the presence of target substance, especially the amount of the target substance (corresponding to the thickness of the layer of the target substance), which is in contact with the biosensor. No fluorophores or other luminescent substances are necessary, however, the use of fluorophores or other luminescent substances is not prohibited. The light source can have a predetermined wave length to increase the signal-to-noise ratio by determining the interference signal in dependency of the wave length of the light source. Thus, light intensity of a predetermined wave length can be measured or light intensity of light pther than having the predetermined wave length can be measured. According to the invention the term "transmitted" encompasses light which is originating from the inside of the optical fiber, originating from the outside of the optical fiber and/or scattered at the biosensor surface.

The biosensor can also be arranged between two optical fibers, wherein the light source is arranged at the free front surface of one of the two optical fibers and the detection device is arranged at the free front surface of the other of the two optical fibers. In the embodiment with two optical fibers an optical characteristic of light "transmitting" the layer of target substance is measured.

According to the invention, the term "optical fiber" encompasses a transparent fiber made of glass (i.e. silica) or plastic. In a preferred embodiment the fiber is flexible to enhance manageability of the device. Light can be transmitted in the fiber, especially from one front surface to the other front surface. An optical fiber typically includes a transparent core which is surrounded by a cladding, the cladding material having a lower index of refraction. Light coupled into the optical fiber can be kept in the core by total internal reflection.

According to the invention, the term "fluid" encompasses a liquid, a gas and/or a combination of a liquid and a gas.

According to the invention, the term "device for measuring interference signals" encompasses a device via which the reflectoric interference of light coupled into the optical fiber occurring at the front surface can be measured. Preferably, the term "device for measuring interference signals" encompasses a device with a light source and a device for measuring the light intensity emitted by the light source and reflected by the front end. Preferably, the light source emits white light (continous wavelength) or light with a pre-determined wavelength. However, the "device for measuring interference signals" is not limited to determine the reflectoric interference. Instead, the device can be adapted to measure an optical characteristic of light originating from a light source with pre-determined characteristic and modified by the biosensor in contact with the target substance. In one embodiment the optical light transmitting the biosensor and the target substance is reflected by a reflecting layer, arranged behind the biosensor and the target substance ("reflection").

According to the invention, the term "biosensor" encompasses an immobilized sensitive and/or reactive element, for example a biomolecule, which is able to attach to or react with a corresponding biomolecule or species of the fluid or sample. The terms "sensitive"/"reactive" encompass that a simple attachment can take place and no chemical and/or biochemical reaction is required. Different reactive elements can be selectively immobilized on the front surface of the optical fiber to form the biosensor. Preferably, the biosensor is in contact with the cleaned and plane front surface of the optical fiber. According to the invention a sensitive and/or reactive area is provided by the biosensor. The area of the sensitive / reactive area is arranged over the front surface. Thus, the biosensor does not need to be in direct contact with the front surface of the fiber. At least one layer can be arranged between the fiber and the biosensor. In case at least one layer is arranged between the biosensor and the optical fiber, stability, signal dynamic and/or sensitivity can be improved. It is not necessary that the whole front surface forms the sensitive / reactive area.

Preferably, the biosensor comprises an immobilized antigen, antibody, protein, oligo-nucleotide (for example RNA, DNA, PNA, LNA), aptamer, small organic molecule (such as estrone), nano particle, nano MIP (molecularly imprinted polymer), MIP or MOF (metal-organic framework). A molecularly imprinted polymer is a polymer that has been processed using the molecular imprinting technique which leaves cavities in polymer matrix with affinity to a chosen "template" molecule. Metal-organic frameworks comprise two components which are a metal ion or cluster and an organic molecule called linker for attachment with a target substance. The biosensor can comprise a biopolymer in which the antigen, antibody, protein, oligo-nucleotide, aptamer, nano particle, nano MIP, MIP or MOF can be immobilized. Polymers, such as polyethylene glycols or dextrans can be used on which the specific biomolecule can be immobilized.

Due to the biosensor at the front end of the optical fiber, a specific or "corresponding" target substance or biomolecule can be attached to or be brought in contact with the front end of the optical fiber. Due to the attachment or contact of the target substance or biomolecule, i.e. the contact of the target substance or biomolecule with the biosensor, the optical properties of the biosensor change (for example the refraction index, optical and geometric thickness, wavelength of interference, absorption, transmission and color). The modification of the optical properties leads to a change in the intensity of light of one or several wavelengths. Due to the modification of the intensity of different wavelengths a constructive interference at the boundary layer of optical fiber-biosensor and biosensor-target substance can be caused. A light beam coupled into the optical fiber, preferably at the front end spaced apart from the front end with the biosensor, is reflected at each phase boundary. The reflected (partial) beams superimpose which results in an interference spectrum which is modulated depending on the optical thickness of the resulting layer of the biosensor and the attached biomolecule (reflectometric interference spectroscopy). Further, fluorescence and/or phosphorescence can be used as an optical property, such that fluorescent and/or phosphorescent particle(s) can be present in the sensitive area and cause a respective change in the optical property which can be measured.

Due to the use of an optical fiber, the device is simpler and can especially be easily connected to an optical detector, which can in turn be the device for measuring interference signals. Further, the optical fiber can be easily replaced. The fiber together with the biosensor attached to its front end can be calibrated via an fluidic sample with a known concentration of the target substance. The (cleaned) calibrated optical fiber with the biosensor can then be positioned into a fluid, especially a liquid, with unknown concentration of the target substance and the amount of free target substance can be determined. Using an optical fiber allows for a high distance between the fluid of interest and the device for measuring interference signals, especially light intensity, which in turn allows for a decoupled detection at places which are difficult to access. The term "decoupled" encompasses that the device for measuring the (interference) signal which can be adapted as a device for measuring light intensity does not have to be specifically geometrically aligned to the front surface. The device can be arranged at the same side at which the light of the light source is coupled into the fiber.

The attachment is reversible, i.e. the target substance in contact with the biosensor can be removed from the biosensor, e.g. by use of a cleaning fluid. According to the invention, "remove" encompasses not only the complete removal of target substance from the biosensor, but also removal of the target substance such that the amount of target substance which is in contact with the biosensor is below a critical concentration.

Preferably, a filter device can be placed ahead of the device for measuring interference signals to block light different from the light beam which was coupled into the optical fiber. Thus, light which originates from a source different from the light source considered for the interference signal is filtered. In a preferred embodiment the filter device can comprise or consist of a lock-in (amplifier) that can extract a specific wavelength and/or modulate a light signal (thus, a signal with a known wavelength or a modulation) from a noisy environment. Therefore, due to the filter device with the subsequent signal processing by the lock-in, the signal-to-noise-ratio can be increased.

Preferably, at least two optical fibers can be connected with each other. The at least two optical fibers can each comprise one biosensor at or over the respective front surface, the two biosensors being different from each other, wherein a wavelength/polarisation filter is located in front of the device for measuring interference signals for selective readout of the light at the respective front surface. Thus, more than one optical fiber can be connected/merged into one optical fiber (connected to the device for measuring interference signals) via a wavelength division multiplexer/polarisation beam splitter and depending on the wavelength/polarisation, each signal of the front surfaces can be readout. Therefore, only one device for measuring interference signals can be used which can be coupled to the one optical fiber into which all the optical fibers (comprising the biosensors) merge.

In a preferred embodiment, the device for measuring interference signals is optically coupled to the optical fiber. The term "optically coupled" encompasses a connection between the optical fiber and the device for measuring interference signals which is selectively detachable, such that different optical fibers can be connected to the device for measuring interference signals.

Other objects, features, advantages and aspects of the present application will become apparent to those skilled in the art from the following description and appended claims. It should be understood, however, that the following description, appended claims, and specific examples, while indicating preferred embodiments of the application, are given by way of illustration only. Various changes and modifications within the spirit and scope of the disclosed invention will become readily apparent to those skilled in the art reading the following.

Examples of the invention will now be described with reference to the accompanying drawings in which:
Figure 1 shows an optical fiber with a biosensor according to the teachings of the present invention, wherein no (bio)molecules are in contact with the biosensor, wherein Figure 1 a shows the optical fiber with a light source and a device for measuring interference signals and Figure 1b shows in a detail view a front surface of the optical fiber.
Figure 2 shows the optical fiber with the biosensor according to Fig. 1, wherein biomolecules are attached to or in contact with the biosensor and Figure 2a shows the optical fiber with a light source and a device for measuring interference signals and Figure 2b shows in a detail view the front surface of the optical fiber.
Figure 3 shows the dependency of the intensity of light as a function of wavelength for the case of Fig. 1 and Fig. 2.
Figure 4 shows a further embodiment of the invention.
Figure 5 shows a further embodiment of the invention.
Figure 6 shows a further embodiment of the invention.

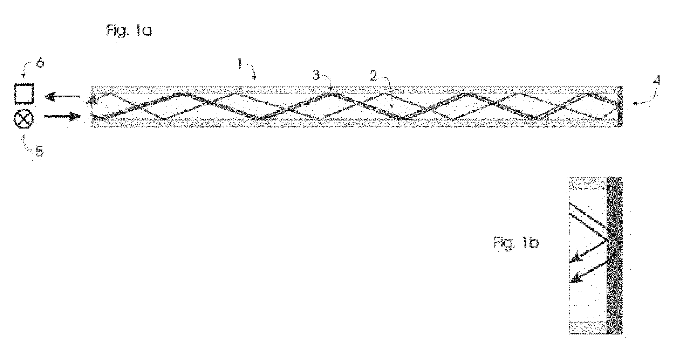

Figure 1 shows the main elements of the device according to the invention. An optical fiber 1 is depicted, which has a core 2 and a cladding 3. The optical fiber 1 has a front surface 4 on which a biosensor is arranged. The front surface 4 comprises a sensitive area for a target substance depending on the biosensor used.

Light emitted from a light source 5 is coupled into the optical fiber 1. At the interfaces of the front surface 4, the boundary surfaces optical fiber - biosensor and biosensor - target substance reflectoric interference occurs. The reflectoric interference is schematically shown in Fig. 1 b. The reflectoric interference can be determined by a device for measuring interference signals 6 which is positioned on the front surface of the optical fiber spaced apart from the front surface 4 with the biosensor. The light source 5 and the device for measuring interference signals 6 can form a unit.

Figure 1 indicates the situation when no target substance is in contact with the biosensor.

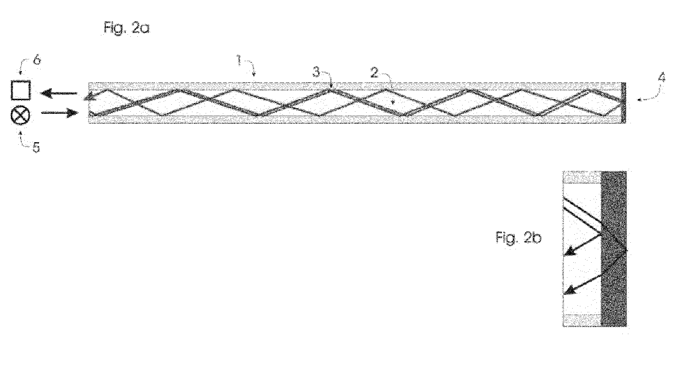

Contrary to Figure 1, Figure 2 indicates the situation when target substance is in contact with the biosensor. The optical thickness of the thin layer formed at the front surface 4 of the optical fiber 1 increases due to the contact of the target substance with the biosensor.

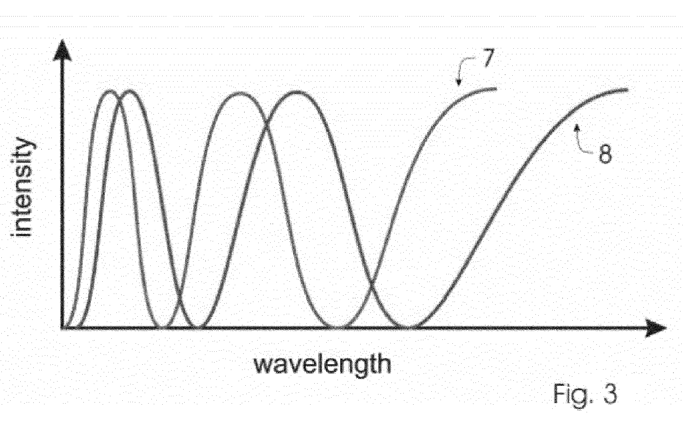

Figure 3 schematically shows the interference signal which can be measured by the device for measuring interference signals 6. The curve 7 indicates the intensity over the wavelength for the situation shown in Figure 1. The curve 8 indicates the intensity over the wavelength for the situation shown in Figure 2. Increase of the optical thickness of the layer on the front surface 4 of the optical fiber 1 leads to a difference in wavelengths with regard to the maximum of intensity (analog with regard to the minimum of intensity). Further, the interference signal changes such that the intensity for a specific wavelength varies depending on the optical thickness of the layer of biosensor in contact with the target substance. The device for measuring interference signals 6 can thus be adapted to determine the light intensity which correlates to the optical thickness of the layer formed by the biosensor and the target substance in contact with the biosensor. Further, the device for measuring interference signals 6 can be adapted (in addition or as an alternative) to measure the intensity at a specific wavelength which also correlates to the optical thickness of the layer formed by the biosensor and the target substance in contact with the biosensor.

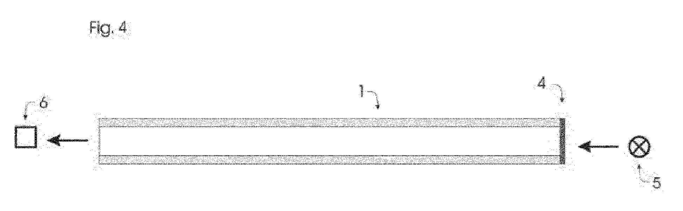

Figures 4 to 6 show further embodiments, in which the light source 5 and the device for measuring interference signals 6 are differently positioned to the position shown in Figures 1 and 2.

In Figure 4 the light source 5 illuminates the front surface 4 comprising the sensitive area for the target substance. The light source 4 illuminates the front surface 4 from outside the optical fiber 1. The light source 4 can be positioned in the liquid or fluid under investigation. The device for measuring interference signals 6 is positioned at the other front surface of the optical fiber 1.

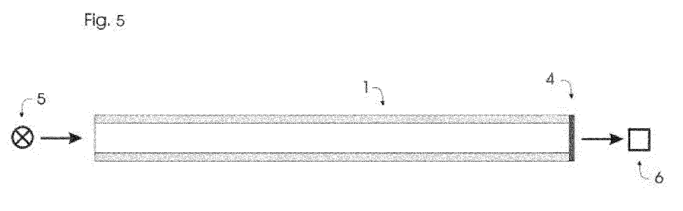

In Figure 5 the device for measuring interference signals 6 is positioned to determine light emitted by the optical fiber 1 through the front surface 4. The light source 5 illuminates the other front surface of the optical fiber 1.

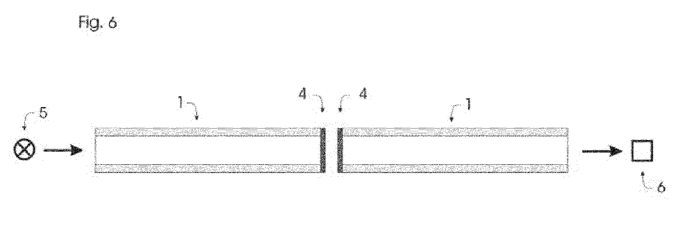

Figure 6 shows an embodiment in which two optical fibers 1 are in contact with each other by the front surfaces 4 of the optical fibers 1. Each front surface 4 of the two optical fibers 1 comprises the sensitive area for the target substance. The contact area, i.e. the front surfaces 4 of the optical fibers 1 are in contact with the liquid/fluid under investigation which comprises the target substance. At one (free) end of one of the optical fibers 1 the light source 4 is positioned. On the other (free) end of the other optical fiber 1 the device for measuring interference signals 6 is positioned.

## Claims

1. Device for detection of a light modifying target substance, the device comprising
a. at least one optical fiber (1) with a front surface (4), the front surface (4) comprising a biosensor that is adapted to contact the target substance,
b. a device for measuring interference signals (6), the device being positioned in the beam reflected or transmitted by the front surface (4) in order to detect an interference signal modified by the target substance in contact with the biosensor.

2. Device according to claim 1, **wherein** the biosensor comprises an immobilized antigen, antibody, protein, oligo-nucleotide, aptamer, nano particle, nano MIP, MIP or MOF.

3. Device according to claim 1 or 2, **wherein** the front surface is adapted such that the biosensor remains on the front surface (4) and that the target substance is at least partly removable via a cleaning fluid.

4. Device according to any one of claims 1 to 4, **wherein** a filter device is placed ahead of the device for measuring interference signals (6) to block light which does not originate from a light source (5) considered for determining interference signals.

5. Device according to any one of claims 1 to 4, **wherein** at least two optical fibers (1) are connected with each other, the at least two optical fibers (1) comprise each one biosensor at the respective front surface (4), the two biosensors being different from each other, wherein a wavelength/polarisation filter is placed ahead of the device for measuring interference signals (6) for selective readout of the light at the respective front surface (4).

6. Device according to any one of claims 1 to 5, **wherein** the device for measuring interference signals (6) is optically coupled to the optical fiber (1).

7. Device according to claim 6, **wherein** a light source (5) and the device for measuring interference signals (6) are formed in one unit.

8. Method for detection of a light modifying target substance, **wherein** an optical fiber (1) with a front surface (4) comprising a biosensor is positioned in a fluid, light is coupled into the optical fiber, and reflectoric interference or absorption/transmission change due to the target substance in contact with the biosensor is measured.

9. Method according to claim 8, **wherein** the interference signal of the optical fiber (1) is calibrated in a fluid with pre-determined concentration of target substance.

10. Method according to claim 8 or 9, **wherein** at least two front surfaces (4) with different biosensors are used and the reflectoric interference or absorption/transmission change is determined by using a wavelength division multiplexer/polarisation beam splitter for readout of the signal of the respective front surface (4).

11. Use of an optical fiber (1) for detection of a light modifying target substance, **wherein** the optical fiber (1) comprises a front surface (4) with a biosensor, which is adapted to contact the target substance, wherein via a device for measuring interference signals (6) the reflectoric interference of the target substance in contact with the biosensor is detectable.

12. Use of an optical fiber (1) according to claim 11, **wherein** a fluid with pre-determined concentration of target substance is used for calibration of the interference signal.
